# EUROPÄISCHE PATENTSCHRIFT

(11) **EP 1 792 239 B1**
(45) Veröffentlichungstag und Bekanntmachung des Hinweises auf die Patenterteilung: **08.02.2012**
(21) Anmeldenummer: 05777334.3
(22) Anmeldetag: 25.08.2005
(51) Int. Cl.: G05B 19/05, G05B 19/042

(54) **VERFAHREN, GRAPHISCHE BENUTZERSCHNITTSTELLE UND ANTRIEB**
METHOD GRAPHICAL USER INTERFACE AND DRIVE
PROCEDE, INTERFACE UTILISATEUR GRAPHIQUE ET ENTRAINEMENT

(30) Priorität: 17.09.2004 DE 102004045594
(43) Veröffentlichungstag der Anmeldung: 06.06.2007
(73) Patentinhaber: SEW-EURODRIVE GmbH & Co. KG, 76646 Bruchsal (DE)
(72) Erfinder: BADER, Antonius, 76646 Bruchsal (DE); TÜNGLER, Eberhard, 76703 Kraichtal-Menzingen (DE)
(86) Internationale Anmeldenummer: PCT/EP2005/009167
(87) Internationale Veröffentlichungsnummer: WO 2006/032344

(56) Entgegenhaltungen:
- EP-A- 0 813 131
- EP-A- 1 037 374
- WO-A-91/06050
- US-A- 5 168 441
- US-A- 5 905 649
- "Programmable ControllerOption Board", Omron , 2003, Retrieved from the Internet: URL:http://www.cms.dicotec.ch/media/Datenb laetter/Omron/02%20Motion%20and%20Drives/F requency%20Inverters/Englisch/3G3MV-PLC-Bo ard+UsersManual.pdf [retrieved on 2009-10-13]

## Beschreibung

Die Erfindung betrifft ein Verfahren, eine Graphische Benutzerschnittstelle und einen Antrieb.

Aus der EP 0 813 131 B1 ist eine graphische Benutzerschnittstelle bekannt, bei der der Benutzer sequenziell nach Auswählen einer Anwendungsform geführt wird. Dies hat zum Nachteil, dass der Bediener, wenn er den Wunsch hat nur irgendeinen Parameter zu ändern, aber die sonstigen Parameter gleich lassen möchte, die gesamte sequenzielle Führung über sich ergehen lassen muss.

Aus der EP 1 037 374 A2 ist eine Hardware-mäßig realisierte Benutzerschnittstelle gezeigt, die allerdings nicht graphisch ausgeführt ist sondern mit Schaltern und Drehknöpfen. (Denn das Modul 26 der Figur 22 der Schrift zeigt Knöpfe stets unverändert.) Es handelt sich also nicht um ein Schirmbild. Bei Schaltern und Drehknöpfen ist keine Programmierung möglich, da diese in Hardware realisiert sind.

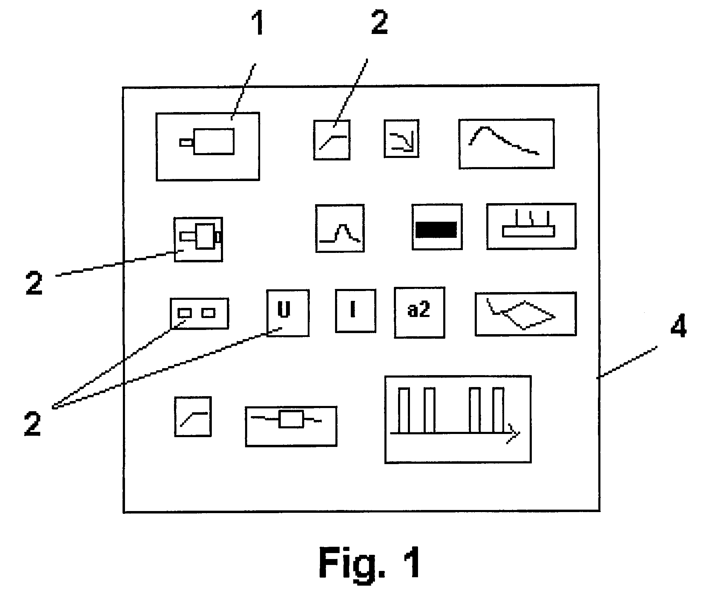

Wesentlich ist bei dieser Schrift ein Interface-System für eine Motorsteuerung. An das in Figur 1 gezeigte Interface ist das programmierbare Ein-Ausgabe-Modul 26 anschließbar, das in Figur 22 näher dargestellt ist Das Modul 26 umfasst Knöpfe (Absatz [0081], dip switch 290 und Potentiometer 320, Absatz [0087] sowie ebenfalls in Hardware ausgeführte LED-Anzeigemittel 292). Das Modul ist also in Hardware ausgeführt und die Knöpfe sind vom Bediener nur bedienbar, aber nicht veränderbar und anpassbar. Insbesondere kann der Bediener des Gerätes nicht die DIP-Schalter oder Potentiometer oder LED an eine andere Position verschieben.

Zwar können die Knöpfe, Schalter und Drehschalter gleichzeitig und in beliebiger Reihenfolge bedient werden, aber es ist keine gegenseitige Beeinflussung der Existenz von Eingabeelementen realisiert. Wenn beispielsweise einer der Schalter betätigt wird, hat dies keinen Einfluss auf die Existenz der anderen Eingabeelemente. Denn diese sind als Hardware, also reale Vorrichtungen, realisiert. Außerdem ist keine Plausibilitätskontrolle realisiert. Die in der Schrift offenbarte Temperaturüberwachung [Absatz 0094] stellt nur eine Überwachung des Motors im Betrieb dar. Dabei wird kritisches Betriebsverhalten überwacht und darauf entsprechend reagiert [Absatz 0094 Monitoring]. Es ist in Absatz [0094] klar beschrieben, dass ein Monitoring vorgenommen wird, also eine Kontrolle der bei Betrieb auftretenden Werte von Größen ausgeführt wird. Der Begriff "Monitoring" bezieht sich also nicht auf Prognose oder Parameter-Plausibilitätskontrolle. Die vom Bediener eingegebenen Daten werden nicht kontrolliert sondern nur das später im Betrieb resultierende Gesamtergebnis. Eine Eingabe von sich gegenseitig wirkungslos machenden Parameterwerten ist erlaubt und nicht verhindert. Mittels der Temperaturüberwachung wird also versucht, ein kritisches Betriebsverhalten zu verhindern. Nachteilig ist dabei allerdings, dass wegen der vorhandenen Wärmekapazitäten und Wärmeübergangswiderstände eine Zeitverzögerung bis zur Detektion der auftretenden kritischen Temperatur eintritt. Beispielsweise in explosionsgefährdender Umgebung wäre der Betrieb des Motors gefahrauslösend. Ein bloßes Monitoring der Temperatur ist also nachteilig und kann keine Fehleingaben beim der Parametereingabe verhindern.

Wenn ein Knopf keine Funktion, also keine Bedeutung, hat, weil das Auswählen einer anderen Betriebsart vorgenommen wurde, die diesen Knopf sinnlos macht, wird dies nicht angezeigt. Der Bediener kann in einem solchen Fall also einen Knopf betätigen, wobei dies völlig wirkungslos bleibt. Er bekommt hierfür keine Rückmeldung. Fehlerhafte Eingaben, Verwirrung und hoher Zeitaufwand werden also nicht vermieden.

Der Erfindung liegt daher die Aufgabe zugrunde, ein Verfahren für die Programmierung einer graphischen Benutzerschnittstelle und eine solche bei einem Antrieb weiterzubilden, wobei die Eingabe der Parameter, Initialisierung und/oder Konfigurierung möglichst schnell, fehlerfrei und ergonomisch sein soll.

Erfindungsgemäß wird die Aufgabe bei dem Verfahren nach den in Anspruch 1, bei der entsprechenden Graphischen Benutzerschnittstelle nach den in Anspruch 11 und bei dem zugehörigen Antrieb nach den in Anspruch 12 angegebenen Merkmalen gelöst.

Wesentliche Merkmale der Erfindung bei dem Verfahren sind, dass das Verfahren zur Programmierung einer Benutzerschnittstelle für eine Antriebssteuerung mittels eines Rechners mit einem Anzeigemittel, das verschiedene Schirmbilder zeigt, bewerkstelligt wird,
wobei die Antriebssteuerung mittels Parametern initialisiert und/oder konfiguriert wird und der Benutzer parallel durch das Programmierverfahren geführt wird, wobei das Verfahren folgende Schritte aufweist:
a) das Anzeigen eines Schirmbildes, das mehrere Bilder umfasst, wobei jedem Bild ein Parameter oder eine Anzahl von funktionell verwandten Parametern für die Initialisierung und/oder Konfiguration der Antriebsteuerung zugeordnet ist,
b) das Auswählen eines der Bilder zur Dateneingabe von Parametern und/oder Datenanzeige von Parametern und/oder zeitlichen Parameterverläufen, insbesondere graphisch,
c) das Kontrollieren der Dateneingabe, wobei
   - eine Logik-Kontrolle und eine Plausibilitätskontrolle umfasst ist,
   - fehlerhafte Eingaben verhindert werden
   - bei Fehlern oder vermuteten Fehlern oder unplausiblen Daten oder sonstigen Gefahren dem Bediener Hinweise gemeldet werden.

Von Vorteil ist dabei, dass bei der Erfindung ein Bildschirm, beispielsweise eines PC, benutzbar ist. Dort werden Schirmbilder angezeigt. Somit ist die Ein-Ausgabeeinheit kostengünstig und flexibel anpassbar realisiert.

Vorteil ist dabei auch, dass wirkungslose Eingabemittel nicht angezeigt werden müssen. Sie können schon von der Logik-Kontrolle verhindert werden. Beispielsweise wählt der Bediener eine Drehzahlregelung statt einer Drehmomentregelung aus. Dann kann also die Eingabemöglichkeit für den Drehmomentsollwert weggelassen werden. Bei der Erfindung wird also das zugehörige Bild gelöscht und stört den Bediener nicht weiter. Außerdem ist auf diese Weise die Menge der Bilder reduzierbar und somit die Eingabe übersichtlicher, also ergonomischer, fehlerfreier und schneller ausführbar. Statt eines Nicht-Anzeigens der Bilder ist auch ein farbliches oder anderweitiges Anzeigen ausführbar. Darüber hinaus werden die Bilder inaktiv gemacht, also bewirkt ein Anklicken dieser Bilder mit dem Mauszeiger nichts.

Bei der Erfindung ist also jedes angezeigte Bild, das beispielsweise einem Knopf entspricht, vom Bediener veränderbar und anpassbar. Insbesondere kann bei einer vorteilhaften Ausführungsart der Bediener des Gerätes Bilder an eine andere Position verschieben.

Eine parallele Eingabe von Daten, wie Parametern, ist ermöglicht. Dies bedeutet, dass es nicht auf die Reihenfolge der Dateneingabe ankommt- zumindest nicht in den von der Logik-Kontrolle freigegebenen Eingabemöglichkeiten. Dabei ist eine gegenseitige Beeinflussung der Eingabeelemente realisierbar. Wenn beispielsweise ein Bild zur Dateneingabe betätigt wird, haben die eingegebenen Daten Einfluss auf die Existenz, die Funktion und/oder das Erscheinungsbild der anderen Eingabeelemente. Dies ist vorteilhaft durch die graphische Darstellungsweise mittels Schirmbildern ermöglicht.

Außerdem ist vorteiligerweise eine Plausibilitätskontrolle realisiert, wobei die vom Bediener eingegebenen Daten kontrollierbar sind.

Wenn ein Bild, beispielsweise ein Knopf als Eingabemittel, keine Funktion, also keine Bedeutung, hat, weil beispielsweise das Auswählen einer anderen Betriebsart vorgenommen wurde, wird dieses Bild nicht angezeigt. Der Bediener kann in einem solchen Fall also kein Bild betätigen, das wirkungslos bleibt.

Beim Betätigen von Bildern sind Rückmeldungen ermöglicht. Fehlerhafte Eingaben werden also vermieden.

Durch die graphisch ausgeführte Programmierung sind die Bilder stets schnell und einfach anpassbar. Dies ist sogar durch den Bediener zumindest teilweise ausführbar.

Von Vorteil ist dabei, dass nun der Benutzer einfach und schnell einen gewünschten Parameter auswählen kann und diesen ändern kann. Ob diese Änderung möglich ist und sinnvoll ist, wird von den Kontrollmitteln überprüft und entsprechende Warnungen, Hinweise und/oder Hilfestellungen generiert, falls eine Gefahr oder ein Problem entstehen könnte. Es werden also schon die Daten während der Dateneingabe kontrolliert, nicht erst im späteren Betrieb

Von Vorteil ist auch, dass der gleichzeitige und gesamtheitliche Überblick über alle Parameterfamilien gegeben ist. Dies begünstigt die naturgegebene menschliche Betrachtungsweise.

Der Benutzer kann sich auch die ihn interessierenden Parameterfamilien als Bilder zusammenstellen und beliebig anordnen auf dem Schirmbild. Auf diese Weise ist eine ergonomische Darstellung erreichbar. Außerdem ist eine flexible Anpassung an die jeweiligen Anforderungen der der Anlage, der geforderten Betriebsweise und des Bediener vorgenommen werden.

Die Logik-Kontrolle ist dabei derart zu verstehen, dass auch kontrolliert wird, ob die eingegebenen Werte technisch sinnvoll sind. Entsprechend werden Bilder oder die Möglichkeit für Dateneingabe gesperrt.

Die Plausibilitäts-Kontrolle ist dabei derart zu verstehen, dass die eingegebenen Daten derart überprüft werden, ob sie auch sinnvoll sind. Wenn beispielsweise nach der Auswahl einer Drehmomentregelung Werte für andere physikalische Größen eingegeben werden, die nur bei zumindest kurzzeitiger Überlastung vom Antrieb erreichbar sind, ist zumindest eine Warnung ausgebbar. Denn es handelt sich hierbei dann um einen vom Bediener gewünschten nicht allgemein üblichen Betriebsmodus mit höherem Risiko als bei Betrieb nach Norm. Es sind hierzu also Prognosemittel in der Erfindung beinhaltet.

Die Menge der Parameter eines Antriebs ist sehr komplex und groß, beispielsweise sind 2000 Parameter vorhanden. Wenn nun der Benutzer es vorzieht, einfach die von der graphischen Benutzerschnittstelle vorgeschlagenen Default-Werte zu belassen, aber einen einzigen Parameter nur ändern möchte, benötigt er bei der Initialisierung oder Konfigurierung sehr wenig Zeit. Denn er muss bei der Erfindung ja nur das entsprechende Bild auswählen, beispielsweise eine Beschleunigungsrampe, und dann dort seine neuen Werte eingeben.

Des Weiteren werden die Bildschirme von Rechnern immer größer und es sind daher viele Bilder darstellbar. Hinter jedem Bild ist dann ein oder es sind sogar mehrere funktionell oder sinngemäß zusammengehörige Parameter veränderbar. Somit hat der Benutzer einen guten Überblick über alle relevanten Parameterfamilien und kann sofort mit einem einzigen Mausklick oder mit einer einzigen Bildschirmberührung die entsprechende Parameterfamilie auswählen.

Weiter vorteilig ist es auch, dass es sich bei der Erfindung um eine objektorientierte Parametriersoftware für den Antrieb handelt. Dies bedeutet, dass das Herstellen des erfindungsgemäßen Verfahrens, also auch das Programmieren, sehr einfach und schnell ausführbar ist.

Die Kontrollmittel sind ebenfalls leicht herzustellen und überwachen vorteiligerweise nicht nur auf Fehler sondern auch beispielsweise auf das Verlassen des zulässigen oder sinnvollen Parameterwertebereichs bei der Eingabe eines Parameterwertes.

Bei einer vorteilhaften Ausgestaltung werden Hinweise dem Bediener graphisch, farblich, blinkend und/oder akustisch gemeldet. Von Vorteil ist dabei, dass verschiedene Informationskanäle nutzbar sind.

Bei einer vorteilhaften Ausgestaltung werden Hinweise, Warnungen, Informationen mit Erklärungen abhängig von den eingegebenen Daten angezeigt, insbesondere schon während der Dateneingabe. Somit ist die Eingabe von Datensätzen, die zu kritischen Zuständen führen weniger wahrscheinlich.

Bei einer vorteilhaften Ausgestaltung sind die frei gegebenen Bilder derart aktiv, dass nach Auswählen ein Fenster geöffnet wird, das die Dateneingabe für die zugehörige Parameterfamilie ermöglicht und/oder die Anzeige von zugehörigen Daten vorsieht. Vorteiligerweise ist das Auswählen besonders einfach durch Anklicken mit dem Mauszeiger oder einem äquivalenten Ansprechen der jeweiligen Bilder ausführbar. Durch Anklicken wird dann das Fenster geöffnet, welches eine gute übersichtliche und von der Schriftgröße her genügend gut lesbare Darstellung aufweist, um die Dateneingabe und Datenanzeige komfortabel ausführbar vorzusehen. Im Fenster, also dem neuen Ausschnitt des Schirmbildes, sind beispielsweise Soll-Parameterverläufe zur graphisch unterstützten Dateneingabe ermöglicht oder prognostizierte Parameterverläufe anzeigbar. Auch sind Knöpfe oder Schalter anzeigbar und bedienbar sowie Felder zum Eingeben von Parameterwerten.

Bei einer vorteilhaften Ausgestaltung werden von der Logik-Kontrolle nicht frei gegebene, also gesperrte Bilder nicht angezeigt. Dies verbessert die Übersichtlichkeit, verhindert Eingabe von unsinnigen Daten und verringert den Zeitbedarf bei der Dateneingabe.

Bei einer vorteilhaften Ausgestaltung ist nach Auswählen eines der Bilder eine Anwendungsform bestimmbar, wobei diese Anwendungsform die grundlegenden Steuerungs- und Regelungsprinzipien bestimmt. Beispielhaft ist eine solche Anwendungsform ein Betreiben des Antriebs mit oder ohne Regler, mit oder ohne Lageregelung, ein Auswählen des Typs von Elektromotor oder dergleichen. Von Vorteil ist dabei, dass nach Auswählen der Anwendungsform die Kontrollmittel für die Anwendungsform entsprechend sinnlose Parameter sperren können oder bei Eingabe von Werten für solchen Parameter Fehlermeldungen generierbar sind.

Bei einer vorteilhaften Ausgestaltung werden die eingegebenen Daten, wie Parameterwerte, und die ausgewählten Anwendungsformen stets kontrolliert auf Plausibilität und Fehlerbehaftung. Von Vorteil ist dabei, dass das Verlassen eines zulässigen Parameterbereichs sofort erkennbar ist und eine entsprechende Mitteilung an den Benutzer absetzbar.

Bei einer vorteilhaften Ausgestaltung werden nur ein Teil der Bilder zum Auswählen frei gegeben und dieser Teil von Bildern über die Kontrolle bestimmt. Von Vorteil ist dabei, dass der Benutzer vor unsinnigen Eingaben oder Zeitverschwendung bewahrbar ist.
Evtl. auch Darstellungsart komplett umschaltbar, z.B. zwischen folgenden Möglichkeiten:
- Parameterliste
- Bilder mit Eingabefenster Graphiken, z.B. Kurve, deren Eckpunkte mit der Maus verschoben werden können
Bei einer vorteilhaften Ausgestaltung werden die Bilder derart frei gegeben, dass der Bediener teilweise sequentiell bei der Eingabe geführt wird, insbesondere nur soweit sequenziell wie notwendig. Von Vorteil ist dabei, dass die Initialisierung und insbesondere auch die Konfigurierung schneller ausführbar ist. Je weniger sequenzielle Führung desto schneller kann ein Benutzer einen einzelnen Parameter ändern ohne ständig eine langwierige, rein sequenzielle Benutzerführung durchlaufen zu müssen.

Bei einer vorteilhaften Ausgestaltung erfolgt die Dateneingabe mittels Tastatur, Maus oder berührungssensitivem Bildschirm und die grafischen Darstellungen werden stets mit den weiteren Daten abgeglichen. Von Vorteil ist dabei, dass dem Benutzer in Echtzeit die eingegebenen Werte visualisierbar sind.

Bei einer vorteilhaften Ausgestaltung werden die angezeigten Bilder abhängig von dem Auswählen und/oder den eingegebenen Daten geändert, insbesondere in ihrem graphischen Erscheinen, in ihrer Anzahl und/oder in ihrer Art. Von Vorteil ist dabei, dass der Benutzer schnell und in übersichtlicher Weise die frei gegebenen Bilder erkennen kann.

Wesentliche Merkmale bei der Benutzerschnittstelle sind, dass sie graphisch ausgeführt ist und für eine Antriebssteuerung mit verbundenem Rechner vorgesehen ist, wobei die Antriebssteuerung mittels Parametern initialisierbar und/oder konfigurierbar ist,
wobei die graphische Benutzerschnittstelle parallel ausgeführt ist,
wobei mehrere parallel angezeigte Bilder umfasst sind, wobei jedem Bild ein Parameter oder eine Anzahl von funktionell verwandten Parametern für die Initialisierung und/oder Konfiguration der Antriebsteuerung zugeordnet ist,
wobei eines der Bilder zur Dateneingabe von Parametern und/oder Datenanzeige von Parametern und/oder zeitlichen Parameterverläufen, insbesondere graphisch, auswählbar ist,
wobei ein Mittel zur Kontrolle vorgesehen ist, das eine Logik-Kontrolle und eine Plausibilitätskontrolle ausführt, fehlerhafte Eingaben verhindert und bei Fehlern oder vermuteten Fehlern oder unplausiblen Daten oder sonstigen Gefahren dem Bediener Hinweise meldet.

Von Vorteil ist dabei, dass die Benutzerschnittstelle als Rechner mit Software ausführbar ist und daher flexibel anpassbare Bilder aufweist. Die Bilder können auch Knöpfe oder Schalter darstellen. Darüber hinaus können die Bilder auch bei deren Auswählen das Öffnen eines Fensters bewirkbar machen. In diesem Fenster ist dann die Dateneingabe eines Parameters oder einer Parameterfamilie, also einer Gruppe funktionell verwandter Parameter ermöglicht. Außerdem ist dem Fenster auch ein Anzeigen von Parametern oder Parameterverläufen ermöglicht. Insbesondere sind hier auch prognostizierte Werte oder Verläufe anzeigbar.

Wesentliche Merkmale der Erfindung bei dem Antrieb mit Rechner zur Durchführung der vorbeschriebenen Verfahren sind, dass Antrieb und Rechner elektrisch verbindbar oder berührungslos zum Datenaustausch verbindbar sind. Insbesondere umfasst der Antrieb zumindest einen Umrichter und/oder einen Elektromotor, wie beispielsweise Asynchronmotor, Synchronmotor, Reluktanzmotor, Gleichstrommotor, Wechselstrommotor und/oder Einphasig oder Drehstrom betriebener Motor ist.

Bei einer vorteilhafter Ausführungsform umfasst der Antrieb zusätzlich einen Sensor zur Winkelerfassung oder Winkelgeschwindigkeitserfassung. Somit ist ein genaues Positionieren ermöglicht. Entsprechende auf den Sensor bezogene und auf Betriebsarten des Umrichters unter Verwendung des Sensors bezogene Parameter sind bei entsprechenden Bildern der Schnittstelle eingebbar.

Bei einer vorteilhaften Ausgestaltung ist mindestens ein Bild vorgesehen zur Parametereingabe und/oder Parameteranzeige, wobei diese Parameter sich nicht auf den Antrieb, insbesondere nicht auf den Motor und den ihn versorgenden Umrichter, beziehen. Insbesondere sind diese Parameter zur Parametrierung eines weiteren Gerätes, insbesondere eines über Feldbus mit dem Umrichter des Antriebs verbundenen Gerätes, vorgesehen. Somit ist die erfindungsgemäße einfache und schnelle Parametereingabe auf mehr als nur den Umrichter eines Antriebs beziehbar. Die Logikkontrolle und Plausibilitätskontrolle ist also auch auf diese weiteren Geräte, beispielsweise eine Maschine oder eine ganze Anlage, ausführbar. Somit ist eine direkte Koppelung der Daten des Antriebs und des Geräts ermöglicht und die Kontrollen sind hinsichtlich der gesamten Betriebsweise einer komplexen Anlage ausführbar in einem Rechner.

Unter dem weiteren Gerät sind auch eine Mehrzahl von Vorrichtungen begrifflich hier zusammengefasst. Vorrichtungen können selbstverständlich auch weitere Antriebe mit jeweiligen Umrichtern und/oder Winkelsensoren sein. Somit erlaubt die Erfindung ein Parametrieren einer gesamten Vielzahl von Vorrichtungen mittels der Benutzerschnittstelle.

Vorteiligerweise sind die Vorrichtungen mittels eines Busses verbunden oder zum berührungslosen Datenaustausch mit der Benutzerschnittstelle vorgesehen.

Bei einer vorteilhaften Ausgestaltung sind diese Parameter zur Parametrierung eines vom Umrichter ausgeführten Steuer- oder Regelverfahrens vorgesehen, wobei dieses Verfahren physikalische Größen eines weiteren Geräts oder einer Anlage beeinflusst, insbesondere wobei diese Größen unabhängig sind von den Zustandsgrößen des Antriebs sind.

Bei einer vorteilhaften Ausgestaltung ist mittels dieses Bildes die Parametereingabe von üblicherweise bei SPS notwendigen Parametern ermöglicht. Mit der Erfindung ist also eine komplexe SPS ersetzbar mittels eines Umrichters und die Dateneingabe besonders schnell und einfach.

Beispielsweise betrifft dieses Verfahren eine Temperaturregelung oder Druckregelung in einer Maschine oder Anlage, insbesondere wobei der Antrieb Teil dieser Anlage ist. Der Umrichter übernimmt also vorteiligerweise nicht nur die Positioniersteuerung und Regelung des Motors des Antriebs sondern er wird gleichzeitig auch zur Prozesssteuerung in einer Anlage verwendbar, wobei die Dateneingabe hierzu besonders schnell und einfach ist - auch wenn die Anlage komplex gestaltet ist. Darüber hinaus ist die Logik- und Plausibilitätskontrolle nicht nur auf den Antrieb bezogen sondern auch auf die komplexe Anlage. Fehler bei der Dateneingabe oder kritische Zustände der Anlage werden vermeidbar, insbesondere kritische zustände, welche durch auf den Umrichter bezogene Parameter, wie Drehzahl und/oder Drehmoment, in der Anlage, beispielsweise einer Spritzgussmaschine, einer Produktionsanlage oder einem Regalfördergerät oder einem Sorter, bewirkbar sind.

Weitere Vorteile ergeben sich aus den Unteransprüchen.

### Bezugszeichenliste

- 1: Bild 2 Bild
- 4: Schirmbild

Die Erfindung wird nun anhand von Abbildungen näher erläutert:

In der Figur 1 ist eine erfindungsgemäße Vorrichtung und ein entsprechendes Verfahren schematisch skizziert.

Auf dem Bildschirm 4 werden dem Bediener viele Bilder 1,2 gezeigt. Jedes Bild 1,2 ist einer Parameterfamilie des Antriebs zugeordnet. Beispielsweise ist mit dem Bild 1 die Art des Motors, also ein Reluktanzmotor, Asynchronmotor, Synchronmotor oder dergleichen auswählbar.

In einem der Bilder 2 sind beispielsweise Beschleunigungsrampen oder Abbremsrampen auswählbar. In anderen Bildern 2 sind Regelparameter und Strom- oder Spannungsgrenzwerte eingebbar oder anzeigbar. In einem weiteren Bild sind Zustands-Werte des verbundenen Antriebs anzeigbar, beispielsweise der Stromverlauf in einem Leistungshalbleiter der Endstufe des Umrichters oder die durch eine Winkelgeber des Antriebs detektierte Drehzahl.

Wenn der Benutzer bei einem bestehenden Antrieb im Betrieb beispielsweise die Beschleunigungsrampe oder die Pulsweitenmodulationsfrequenz ändern möchte, muss er nur auf das entsprechende Bild klicken oder er trägt den Wert einfach direkt in das Bild an der richtigen Stelle ein. Somit ist keine sequenzielle Führung notwendig und der Benutzer spart viel Zeit. Außerdem hat er ständig alle Parameterfamilien übersichtlich auf einem Schirmbild 4.

Selbstverständlich kann der Benutzer seine Initialisierung und Konfigurierung des Antriebs noch weiter beschleunigen, wenn er die vorgeschlagenen Default-Werte der graphischen Benutzerschnittstelle unverändert belässt oder nur einige wenige Werte verändert.

Bei Verwendung von Antrieben mit elektronischem Typenschild, also mit am Antrieb angebrachten elektronisch lesbaren Identifizierungen, ist der vorgeschlagene Defaultwert oft sehr gut und der Benutzer kann sich auf die Eingabe der für die angetriebene Maschine erforderlichen oder günstigen Werte beschränken, beispielsweise Drehzahl oder die genannten Rampen. In diesem Fall ist es sogar noch nicht einmal notwendig, den Typ des Elektromotors oder des Getriebes einzugeben, da diese ja schon elektronisch an den Rechner übermittelt ist.

Der Antrieb umfasst zumindest einen Umrichter zur Versorgung eines verbundenen Elektromotors. Der Umrichter umfasst einen Mikrocontroller zur Ausführung von Steuer- und Regelungsverfahren.

In Weiterbildung sind auch die in der Beschreibungseinleitung und den Ansprüchen offenbarten Ausführungsbeispiele ausführbar.

Insbesondere ist bei weiteren erfindungsgemäßen Ausführungsbeispielen die Benutzerschnittstelle auch erweiterbar für weitere Geräte, Vorrichtungen, Maschinen und Anlagen. Sogar eine SPS ist ersetzbar durch den Umrichter, wobei die Benutzerschnittstelle sozusagen die Benutzerschnittstelle einer SPS ersetzbar macht.

Darüber hinaus sind vom Umrichter auch andere Prozesse steuerbar und regelbar, die nichts mit dem Antrieb oder nur indirekt zu tun haben.

## Patentansprüche

1. Verfahren zur Programmierung einer Benutzerschnittstelle für eine Antriebssteuerung mittels eines Rechners mit einem Anzeigemittel, das verschiedene Schirmbilder zeigt,
wobei die Antriebssteuerung mittels Parametern initialisiert und/oder konfiguriert wird und eine parallele Parametrierung, also ein Auswählen eines beliebigen aus mehreren Parametern, ermöglicht wird, wobei das Verfahren folgende Schritte aufweist:
a) das Anzeigen eines Schirmbildes, das mehrere Bilder umfasst, wobei jedem Bild ein Parameter oder eine Anzahl von funktionell verwandten Parametern für die Initialisierung und/oder Konfiguration der Antriebsteuerung zugeordnet ist,
b) das Auswählen eines der Bilder zur Dateneingabe von Parametern und/oder Datenanzeige von Parametern und/oder zeitlichen Wertverläufen, insbesondere graphisch,
c) das Kontrollieren der Dateneingabe, wobei
- eine Logik-Kontrolle und eine Plausibilitätskontrolle umfasst ist und
- fehlerhafte Eingaben verhindert werden,
wobei nach Auswählen eines der Bilder eine Anwendungsform bestimmbar ist, wobei diese Anwendungsform die grundlegenden Steuerungs- und Regelungsprinziplen bestimmt,
wobei nur ein Teil der Bilder zum Auswählen frei gegeben werden und dieser Teil von Bildern über die Kontrolle bestimmt wird,
wobei die frei gegebenen Bilder derart aktiv sind, dass nach Auswählen, Insbesondere beispielsweise durch Anklicken mit dem Mauszeiger oder einem äquivalenten Ansprechen der jeweiligen Bilder, ein Fenster geöffnet wird, das die Dateneingabe für die zugehörige Parameterfamille ermöglicht und/oder die Anzeige von zugehörigen Daten vorsieht,
- wobei die frei gegebenen Bilder dem Bediener farblich, blinkend und/oder akustisch gekennzeichnet werden
- oder wobei Bilder, die von der Logik-Kontrolle nicht frei gegeben, also gesperrt, sind, nicht angezeigt werden,
wobei die Parameter erste und zweite Parameter aufweisen, wobei die ersten Parameter zur Parametrierung des auf einen Motor des Antriebs und den ihn versorgenden Umrichter wirkenden ersten Steuer- oder Regelverfahrens vorgesehen sind und wobei die zweiten Parameter zur Parametrierung eines auf eine Maschineneinheit wirkenden zweiten Steuer- oder Regelverfahrens vorgesehen sind, wobei die Maschineneinheit unabhängig vom Motor und dem diesen versorgenden Umrichter ist, also nicht vom Motor angetrieben wird,
wobei mindestens ein Bild vorgesehen ist zur Parametereingabe und/oder Parameteranzeige der zweiten Parameter,
wobei das zweite Steuer- oder Regelverfahren physikalische Größen eines weiteren Geräts oder einer Anlage beeinflusst,
wobei diese Größen unabhängig sind von den Zustandsgrößen des Antriebs.

2. Verfahren nach Anspruch 1,
**dadurch gekennzeichnet, dass**
die angezeigten Bilder abhängig von dem Auswählen und/oder den eingegebenen Daten geändert werden, insbesondere in ihrem graphischen Erscheinen, in ihrer Anzahl und/oder in ihrer Art, wie auch Aktivität, Wirksamkeit, Unwirksamkeit oder Inaktivität.

3. Verfahren nach mindestens einem der vorangegangenen Ansprüche,
**dadurch gekennzeichnet, dass**
Hinweise, Warnungen, Informationen mit Erklärungen abhängig von den eingegebenen Daten angezeigt werden, insbesondere schon während der Dateneingabe.

4. Verfahren nach mindestens einem der vorangegangenen Ansprüche,
**dadurch gekennzeichnet, dass**
Hinweise dem Bediener graphisch, farblich, blinkend, vibrierend und/oder akustisch gemeldet werden.

5. Verfahren nach mindestens einem der vorangegangenen Ansprüche,
**dadurch gekennzeichnet, dass**
die eingegebenen Daten, wie Parameterwerte, und die ausgewählten Anwendungsformen stets kontrolliert werden auf Plausibilität und Fehlerbehaftung.

6. Verfahren nach mindestens einem der vorangegangenen Ansprüche,
**dadurch gekennzeichnet, dass**
die Bilder derart frei gegeben werden, dass der Bediener teilweise sequentiell bei der Eingabe geführt wird, insbesondere nur soweit sequentiell wie notwendig.

7. Verfahren nach mindestens einem der vorangegangenen Ansprüche,
**dadurch gekennzeichnet, dass**
die Dateneingabe mittels Tastatur, Maus oder berührungssensitivem Bildschirm erfolgt und die grafischen Darstellungen stets mit den weiteren Daten abgeglichen werden.

8. Verfahren nach Anspruch 1,
**dadurch gekennzeichnet, dass**
diese Parameter zur Parametrierung eines weiteren Gerätes, insbesondere eines über Feldbus mit dem Umrichter des Antriebs verbundenen Gerätes, vorgesehen sind.

9. Verfahren nach Anspruch 1,
**dadurch gekennzeichnet, dass**
dieses Verfahren eine Temperaturregelung oder Druckregelung in einer Maschine oder Anlage betrifft, insbesondere wobei der Antrieb Teil dieser Anlage ist.

10. Verfahren nach Anspruch 1,
**dadurch gekennzeichnet, dass**
mittels dieses Bildes die Parametereingabe von üblicherweise bei SPS notwendigen Parametern ermöglicht ist.

11. Graphische Benutzerschnittstelle für eine Antriebssteuerung mit verbundenem Rechner,
wobei die Antriebssteuerung mittels Parametern initialisierbar und/oder konfigurierbar ist,
wobei die graphische Benutzerschnittstelle parallel ausgeführt ist,
wobei mehrere parallel angezeigte Bilder umfasst sind, wobei jedem Bild ein Parameter oder eine Anzahl von funktionell verwandten Parametern für die Initialisierung und/oder Konfiguration der Antriebsteuerung zugeordnet ist,
wobei eines der Bilder zur Dateneingabe von Parametern und/oder Datenanzeige von Parametern und/oder zeitlichen Parameterveläufen, insbesondere graphisch, auswählbar ist,
wobei ein Mittel zur Kontrolle vorgesehen ist, das eine Logik-Kontrolle und eine Plausibilitätskontrolle ausführt, fehlerhafte Eingaben verhindert und bei Fehlern oder vermuteten Fehlern oder unplausiblen Daten oder sonstigen Gefahren dem Bediener Hinweise meldet
wobei nach Auswählen eines der Bilder eine Anwendungsform bestimmbar Ist, wobei diese Anwendungsform die grundlegenden Steuerungs- und Regelungsprinzipien bestimmt,
wobei nur ein Tell der Bilder zum Auswählen frei gegeben wird und dieser Tell von Bildern über die Kontrolle bestimmt wird,
wobei die frei gegebenen Bilder derart aktiv sind, dass nach Auswählen, Insbesondere beispielsweise durch Anklicken mit dem Mauszeiger oder einem äquivalenten Ansprechen der jeweiligen Bilder, ein Fenster geöffnet wird, das die Dateneingabe für die zugehörige Parameterfamilie ermöglicht und/oder die Anzeige von zugehörigen Daten vorsieht,
- wobei die frei gegebenen Bilder dem Bediener farblich, blinkend und/oder akustisch gekennzeichnet werden
- oder wobei Bilder, die von der logik-Kontrolle nicht frei gegeben, also gesperrt, sind, nicht angezeigt werden,
wobei die Parameter erste und zweite Parameter aufweisen, wobei die ersten Parameter zur Parametrierung des auf einen Motor des Antriebs und den Ihn versorgenden Umrichter wirkenden ersten Steuer- oder Regelverfahrens vorgesehen sind und wobei die zweiten Parameter zur Parametrierung eines auf eine Maschineneinheit wirkenden zweiten Steuer- oder Regelverfahrens vorgesehen sind, wobei die Maschineneinheit unabhängig vom Motor und dem diesen versorgenden Umrichter ist, also nicht vom Motor angetrieben wird,
wobei mindestens ein Bild vorgesehen Ist zur Parametereingabe und/oder Parameteranzelge der zweiten Parameter,
wobei das zweite Steuer- oder Regelverfahren physikalische Größen eines weiteren Geräts oder einer Anlage beeinflusst,
wobei diese Größen unabhängig sind von den Zustandsgrößen des Antriebs.

12. Antrieb mit Rechner, worauf eine graphische Benutzerschnittstelle nach Anspruch 11 Implementiert ist,
wobei der Rechner speziell angepasst Ist zur Durchführung des Verfahrens nach einem der Ansprüche 1 bis 10,
insbesondere wobei Antrieb und Rechner elektrisch verbindbar oder berührungslos zum Datenaustausch verbindbar sind.

13. Antrieb nach Anspruch 12.
**dadurch gekennzeichnet, dass**
der Antrieb zumindest einen Umrichter und/oder einen Elektromotor umfasst.

14. Antrieb nach Anspruch 12 oder 13,
**dadurch gekennzeichnet, dass**
der Antrieb zusätzlich einen Sensor zur Winkelerfassung oder Winkelgeschwindigkeitserfassung umfasst.

15. Antrieb nach Anspruch 12, 13 oder 14,
**dadurch gekennzeichnet, dass**
der Elektromotor ein Asynchronmotor, Synchronmotor, Reluktanzmotor, Gleichstrommotor, Wechselstrommotor und/oder Einphasig oder Drehstrom betriebener Motor ist.

## Claims

1. Method for programming a user interface for a drive control by means of a computer with a display means showing various screen images,
wherein the drive control is initialised and/or configured by means of parameters, and parallel parameterisation, i.e. selection of any one from a plurality of parameters, is made possible, the method having the following steps:
a) display of a screen image comprising a plurality of images, each image being assigned a parameter or a number of functionally related parameters for the initialisation and/or configuration of the drive control,
b) selection of one of the images for data input of parameters and/or data display of parameters and/or time value profiles, in particular graphically,
c) checking of the data input, wherein
- a logic check and a plausibility check is included, and
- erroneous inputs are prevented,
wherein after selection of one of the images an application form can be determined, this application form determining the basic control and regulation principles,
wherein only some of the images are enabled for selection and these images are determined via the checking, wherein the enabled images are active in such a way that after selection, in particular for example by clicking with the mouse pointer or an equivalent activation of the particular images, a window is opened allowing the data input for the associated parameter family and/or providing the display of associated data,
- the enabled images being indicated to the user in colour, flashing and/or audibly
- or images which are not enabled by the logic check, i.e. are blocked, not being displayed,
wherein the parameters have first and second parameters, the first parameters being provided for the parameterisation of the first control or regulating method acting on a motor of the drive and the converter supplying it, and the second parameters being provided for the parameterisation of a second control or regulating method acting on a machine unit, the machine unit being driven independently of the motor and the converter supplying the latter, i.e. not by the motor,
wherein at least one image is provided for parameter input and/or parameter display of the second parameters,
wherein the second control or regulating method influences physical quantities of a further apparatus or an installation,
these quantities being independent of the state quantities of the drive.

2. Method according to Claim 1,
**characterised in that**
the displayed images are changed in dependence on the selection and/or the input data, in particular in their graphical appearance, their number and/or their type, as well as activity, effectiveness, ineffectiveness or inactivity.

3. Method according to at least one of the preceding claims,
**characterised in that**
notices, warnings, information with explanations are displayed in dependence on the input data, in particular already during the data input.

4. Method according to at least one of the preceding claims,
**characterised in that**
notices are indicated to the user graphically, in colour, flashing, vibrating and/or audibly.

5. Method according to at least one of the preceding claims,
**characterised in that**
the input data, such as parameter values, and the selected application forms are continuously checked for plausibility and errors.

6. Method according to at least one of the preceding claims,
**characterised in that**
the images are enabled in such a way that the user is guided partly sequentially during the input, in particular only as sequentially as necessary.

7. Method according to at least one of the preceding claims,
**characterised in that**
the data input takes place by means of keyboard, mouse or touch-sensitive screen and the graphical representations are continuously matched to the further data.

8. Method according to Claim 1,
**characterised in that**
these parameters are provided for the parameterisation of a further apparatus, in particular an apparatus connected to the converter of the drive via field bus.

9. Method according to Claim 1,
**characterised in that**
this method relates to a temperature regulation or pressure regulation in a machine or an installation, in particular the drive being part of this installation.

10. Method according to Claim 1,
**characterised in that**
this image makes possible the parameter input of parameters usually required in SPC.

11. Graphical user interface for a drive control with connected computer,
wherein the drive control is initialisable and/or configurable by means of parameters,
wherein the graphical user interface is of parallel design,
wherein a plurality of images are displayed in parallel, each image being assigned a parameter or a number of functionally related parameters for the initialisation and/or configuration of the drive control,
wherein one of the images is selectable for data input of parameters and/or data display of parameters and/or time value profiles, in particular graphically,
wherein a means for checking is provided, which performs a logic check and a plausibility check, prevents erroneous inputs and in the event of errors or presumed errors or implausible data or other dangers sends notices to the user,
wherein after selection of one of the images an application form can be determined, this application form determining the basic control and regulation principles,
wherein only some the images are enabled for selection and these images are determined via the checking,
wherein the enabled images are active in such a way that after selection, in particular for example by clicking with the mouse pointer or an equivalent activation of the particular images, a window is opened allowing the data input for the associated parameter family and/or providing the display of associated data,
- the enabled images being indicated to the user in colour, flashing and/or audibly
- or images which are not enabled by the logic check, i.e. are blocked, not being displayed,
wherein the parameters have first and second parameters, the first parameters being provided for the parameterisation of the first control or regulating method acting on a motor of the drive and the converter supplying it, and the second parameters being provided for the parameterisation of a second control or regulating method acting on a machine unit, the machine unit being driven independently of the motor and the converter supplying the latter, i.e. not by the motor,
wherein at least one image is provided for parameter input and/or parameter display of the second parameters,
wherein the second control or regulating method influences physical quantities of a further apparatus or an installation,
these quantities being independent of the state quantities of the drive.

12. Drive with computer, on which a graphical user interface according to Claim 11 is implemented,
wherein the computer is specially adapted for carrying out the method according to one of Claims 1 to 10,
in particular wherein drive and computer are electrically connectable or contactlessly connectable for data exchange.

13. Drive according to Claim 12,
**characterised in that**
the drive comprises at least a converter and/or an electric motor.

14. Drive according to Claim 12 or 13,
**characterised in that**
the drive additionally comprises a sensor for angle detection or angular velocity detection.

15. Drive according to Claim 12, 13 or 14
**characterised in that**
the electric motor is an asynchronous motor, synchronous motor, reluctance motor, d.c. motor, a.c. motor and/or single-phase or three-phase motor.

## Revendications

1. Procédé de programmation d'une interface utilisateur pour une commande d'entraînement au moyen d'un ordinateur comprenant un moyen d'affichage qui montre différentes images écran,
dans lequel la commande d'entraînement est initialisée et/ou configurée au moyen de paramètres et un paramétrage en parallèle, c'est-à-dire une sélection d'un paramètre quelconque parmi plusieurs, est possible, lequel procédé comporte les étapes suivantes :
a) l'affichage d'une image écran qui comprend plusieurs images, un paramètre ou une pluralité de paramètres fonctionnellement apparentés pour l'initialisation et/ou la configuration de la commande d'entraînement étant associé(e) à chaque image,
b) la sélection d'une des images pour l'entrée des données de paramètres et/ou l'affichage des données de paramètres et/ou de tracés de valeurs en fonction du temps, en particulier sous forme graphique,
c) le contrôle de l'entrée des données,
- un contrôle logique et un contrôle de plausibilité étant compris,
- les entrées erronées étant empêchées,
une forme d'application pouvant être déterminée après sélection d'une des images, cette forme d'application déterminant les principes fondamentaux de commande et de régulation,
seule une partie des images étant activée pour la sélection et cette partie des images étant déterminée par l'intermédiaire du contrôle,
les images activées étant actives en ce sens qu'après sélection, en particulier par exemple en cliquant dessus avec le curseur de la souris ou par un déclenchement équivalent des images concernées, une fenêtre s'ouvre qui permet l'entrée des données pour la famille de paramètres correspondants et/ou prévoit l'affichage des données correspondantes,
- les images activées étant signalées à l'utilisateur par une couleur, par un clignotement et/ou acoustiquement
- ou les images non activées, c'est-à-dire bloquées par le contrôle logique n'étant pas affichées,
les paramètres comprenant des premiers et des deuxièmes paramètres, les premiers paramètres étant prévus pour paramétrer le premier procédé de commande et de régulation agissant sur un moteur de l'entraînement et le variateur de vitesse qui l'alimente, et les deuxièmes paramètres étant prévus pour paramétrer un deuxième procédé de commande et de régulation agissant sur une unité de machine, l'unité de machine étant entraînée indépendamment du moteur et du variateur de vitesse qui l'alimente, c'est-à-dire non entraînée par le moteur,
au moins une image étant prévue pour l'entrée de paramètres et/ou l'affichage de paramètres des deuxièmes paramètres,
le deuxième procédé de commande et de régulation influençant des grandeurs physiques d'un autre appareil ou d'une installation,
ces grandeurs étant indépendantes des grandeurs d'état de l'entraînement.

2. Procédé selon la revendication 1,
**caractérisé en ce que**
les images affichées sont modifiées en fonction de la sélection et/ou des données entrées, en particulier en ce qui concerne leur apparence graphique, leur nombre et/ou leur nature, comme par exemple activité, validité, invalidité ou inactivité.

3. Procédé selon au moins une des revendications précédentes,
**caractérisé en ce que**
des indications, avertissements, informations avec des explications sont affichés en fonction des données entrées, en particulier déjà pendant l'entrée des données.

4. Procédé selon au moins une des revendications précédentes,
**caractérisé en ce que**
les indications sont données à l'utilisateur sous forme graphique, par une couleur, par clignotement, par vibration et/ou acoustiquement.

5. Procédé selon au moins une des revendications précédentes,
**caractérisé en ce que**
les données entrées, comme des valeurs de paramètres, et les formes d'application sélectionnées sont contrôlées en permanence quant à leur plausibilité et la présence d'erreurs.

6. Procédé selon au moins une des revendications précédentes,
**caractérisé en ce que**
les images sont activées de façon que l'utilisateur soit guidé en partie séquentiellement lors de l'entrée, en particulier seulement séquentiellement dans la mesure nécessaire.

7. Procédé selon au moins une des revendications précédentes,
**caractérisé en ce que**
l'entrée des données s'effectue au moyen d'un clavier, d'une souris ou d'un écran sensible au toucher et les représentations graphiques sont toujours ajustées aux autres données.

8. Procédé selon la revendication 1,
**caractérisé en ce que**
ces paramètres sont prévus pour le paramétrage d'un autre appareil, en particulier d'un appareil relié au variateur de vitesse de l'entraînement via un bus de terrain.

9. Procédé selon la revendication 1,
**caractérisé en ce que**
ce procédé concerne une régulation de température ou une régulation de pression dans une machine ou une installation, l'entraînement faisant en particulier partie de cette installation.

10. Procédé selon la revendication 1,
**caractérisé en ce que**
cette image permet l'entrée des paramètres habituellement nécessaires pour les API.

11. Interface utilisateur graphique pour une commande d'entraînement reliée à un ordinateur,
la commande d'entraînement pouvant être initialisée et/ou configurée au moyen de paramètres,
l'interface utilisateur graphique s'exécutant en parallèle,
plusieurs images affichées en parallèle étant comprises, un paramètre ou une pluralité de paramètres fonctionnellement apparentés pour l'initialisation et/ou la configuration de la commande d'entraînement étant associé(e) à chaque image,
une des images pouvant être sélectionnée pour l'entrée des données de paramètres et/ou l'affichage des données de paramètres et/ou de tracés de paramètres en fonction du temps, en particulier sous forme graphique,
un moyen de contrôle étant prévu, qui effectue un contrôle logique et un contrôle de plausibilité, empêche les entrées erronées et donne des indications à l'utilisateur en cas d'erreurs, d'erreurs supposées, de données non plausibles ou d'autres risques,
une forme d'application pouvant être déterminée après sélection d'une des images, cette forme d'application déterminant les principes fondamentaux de commande et de régulation,
seule une partie des images étant activée pour la sélection et cette partie des images étant déterminée par l'intermédiaire du contrôle,
les images activées étant actives en ce sens qu'après sélection, en particulier par exemple en cliquant dessus avec le curseur de la souris ou par un déclenchement équivalent des images concernées, une fenêtre s'ouvre qui permet l'entrée des données pour la famille de paramètres correspondants et/ou prévoit l'affichage des données correspondantes,
- les images activées étant signalées à l'utilisateur par une couleur, par un clignotement et/ou acoustiquement
- ou les images non activées, c'est-à-dire bloquées par le contrôle logique
n'étant pas affichées,
les paramètres comprenant des premiers et des deuxièmes paramètres, les premiers paramètres étant prévus pour paramétrer le premier procédé de commande et de régulation agissant sur un moteur de l'entraînement et le variateur de vitesse qui l'alimente, et les deuxièmes paramètres étant prévus pour paramétrer un deuxième procédé de commande et de régulation agissant sur une unité de machine, l'unité de machine étant entraînée indépendamment du moteur et du variateur de vitesse qui l'alimente, c'est-à-dire non entraînée par le moteur,
au moins une image étant prévue pour l'entrée de paramètres et/ou l'affichage de paramètres des deuxièmes paramètres,
le deuxième procédé de commande et de régulation influençant des grandeurs physiques d'un autre appareil ou d'une installation,
ces grandeurs étant indépendantes des grandeurs d'état de l'entraînement.

12. Entraînement avec un ordinateur sur lequel est implémentée une interface utilisateur graphique selon la revendication 11,
l'ordinateur étant spécialement adapté pour exécuter le procédé selon une des revendications 1 à 10,
entraînement et ordinateur pouvant, en particulier, être reliés électriquement ou reliés sans contact pour échanger des données.

13. Entraînement selon la revendication 12,
**caractérisé en ce que**
l'entraînement comprend au moins un variateur de vitesse et/ou un moteur électrique.

14. Entraînement selon la revendication 12 ou 13,
**caractérisé en ce que**
l'entraînement comprend en plus un capteur pour la détection d'angle ou la détection de vitesse angulaire.

15. Entraînement selon la revendication 12, 13 ou 14,
**caractérisé en ce que**
le moteur électrique est un moteur asynchrone, un moteur synchrone, un moteur à réluctance, un moteur à courant continu, un moteur à courant alternatif et/ou un moteur monophasé ou triphasé.
